# EUROPEAN PATENT SPECIFICATION

(11) **EP 1 455 967 B1**
(45) Date of publication and mention of the grant of the patent: **17.05.2006**
(21) Application number: 02796919.5
(22) Date of filing: 16.12.2002
(51) Int. Cl.: B21D 26/02, H01Q 15/16, G02B 5/10

(54) **A METHOD OF FORMING AN ELECTROMAGNETIC REFLECTOR**
VERFAHREN ZUR HERSTELLUNG EINES ELEKTROMAGNETISCHEN REFLEKTORS
PROCEDE DE FORMAGE D'UN REFLECTEUR ELECTROMAGNETIQUE

(30) Priority: 18.12.2001 GB 0130141
(43) Date of publication of application: 15.09.2004
(73) Proprietor: UNIVERSITY OF DURHAM, Durham, DH1 3HP (GB)
(72) Inventor: ORFORD, Keith, John Old Coach House, Durham DH1 3DN (GB); McCOMB, Thomas, John, Lowry, Durham DH1 4NF (GB); CHADWICK, Paula, Mary, Durham DH7 9QR (GB); OSBORNE, John, Louis, Durham DH1 5YX (GB); RANER, Stephen, Mark, Durham DH1 5FG (GB)
(74) Representative: Cooper, John
(86) International application number: PCT/GB2002/005697
(87) International publication number: WO 2003/051554

(56) References cited:
- US-A- 4 063 705
- US-A- 4 574 457
- US-A- 4 731 144
- US-A- 5 564 066
- US-A- 5 702 649

## Description

The present invention relates to electromagnetic reflectors such as concave mirror elements for use in astronomical telescopes, solar energy concentrators etc., and to methods of forming such reflectors. Besides optical reflectors, the invention is also applicable to curved electromagnetic radiation reflectors for a variety of purposes, such as microwave reflectors for use in telecommunications.

Conventional curved mirror elements for astronomical telescopes are typically formed by machining solid glass or aluminium. This is expensive and the resulting mirror elements are relatively heavy. Conventional mirrors for very large telescopes (e.g. of the order of 7m diameter, such as are required for gamma ray astronomy) have to be assembled as an array of segments, because it would be impractical to form such large mirrors in a single piece using conventional techniques. It is desirable that such mirrors should be lightweight, inexpensive and robust. Conventional mirrors are unsatisfactory in all of these respects.

There have been previous proposals for the manufacture of mirrors/reflectors using composite materials and the like, as exemplified by US-A-5564066, however none of these has been satisfactory in practice, for a number of reasons.

US 4,574,457, discloses the manufacture of a reflector for a microwave antenne; the reflector is over 3m in diaimeter and its shape is formed using an array of posts that can be individually adjusted.

In accordance with the invention, there is provided a method of forming an electromagnetic reflector with a curved surface, comprising:
providing a mould having a curved surface with a curvature opposite to that of the required curved surface;
providing a vacuum source communicating with the curved surface of the mould;
applying a flexible, generally planar member that is to form the required curved surface to the oppositely curved surface of the mould;
operating the vacuum source to evacuate the space between the planar member and the mould such that the planar member conforms closely to the curved surface of the mould; and
while continuing to operate the vacuum source, bonding a front surface of a structurally rigid base member to the exposed surface of the planar member opposite the surface in contact with the mould;
characterised in that the curved surface of the mould is continuous apart from at least one vacuum part and optionally, one or more grooves for air evacuation.

The vacuum source may be deactivated once any bonding agent used to bond the base member to the planar member has been cured.

The method preferably further includes bonding at least one peripheral casing member to a peripheral surface of the base member and at least one generally planar casing member to a rear surface of the base member. Preferably, this is done while the base member is in situ on the mould, and most preferably while the vacuum source is operating.

The electromagnetic reflector formed by the method is typically circular in plan, but may have other shapes such as part-circular segments, or geometric (polygonal) shapes, e.g. hexagonal, octagonal etc, or triangular segments of polygonal shapes, etc.

The curved surface is typically at least partially concave, or may be at least partially convex. This includes surfaces having hybrid or irregular shapes that may include both concave and convex facets.

The base member is preferably formed from a rigid, low density material, preferably a honeycomb material and most preferably an aluminium or aluminium alloy honeycomb material.

The flexible planar member is preferably a reflective member, which preferably comprises a thin metallic sheet, more preferably a thin aluminium or aluminium alloy sheet, and most preferably an anodised and coated aluminium sheet.

The casing members are preferably also formed from aluminium or aluminium alloy.

Embodiments of the invention will now be described, by way of example only, with reference to the accompanying drawings, in which:
Fig. 1 is a schematic cross-sectional side view illustrating the manner in which a reflector is formed in accordance with the invention; and
Fig. 2 is a plan view of a mould as shown in Fig. 1.

Referring now to the drawings, a circular curved reflector 10 comprises a base member 12, a reflective member 14, a peripheral (annular, ring-shaped) casing member 16 and a planar casing member 18. The base member 12 has a generally planar rear surface, a front surface (adjacent the reflective member 14), and an annular peripheral surface. The front surface of the base member may be shaped to conform approximately to the required curvature of the reflective surface (particularly where the curvature is relatively large) or may be substantially planar (particularly where the curvature is relatively small).

The reflective member 14 comprises a thin, flexible sheet of reflective material that is bonded to the front surface of the base member 12. The required curvature of the reflective member 14 is obtained by vacuum forming the reflective member 14 to a mould 20, prior to bonding the front surface of the base member 12 thereto, as shall be described in more detail below.

The casing members 16, 18 are bonded to the other outer surfaces of the base member 12 (and to the periphery of the reflective member 14 in the case of the annular casing member 16).

In order for the reflector to exhibit good thermal stability, it is preferable for all of its components to be formed from the same or similar materials, or from materials having similar thermal properties. It is also desirable for the weight of the reflector to be minimised. For this reason, aluminium or aluminium alloy is the preferred material for the base member 12, reflective member 14 and casing members 16 and 18, and the components are bonded together using an epoxy material having similar thermal properties to aluminium, as is well known, for example, in the aerospace industry.

The base member 12 preferably comprises a rigid aluminium honeycomb material, such as is used for structural members in aircraft. The size of the honeycomb cells should be sufficiently small to avoid the formation of significant flats in the reflective surface when the reflective member is bonded thereto. The reflective member 14 preferably comprises a thin sheet of anodised aluminium, most preferably anodised and coated aluminium (e.g. coated with TiO₂ or quartz after anodization). The thickness of the reflective member is determined by the requirement for it to be deformed by a vacuum to conform to the surface of the mould 20 and the need to avoid the formation of flats, which depends on the size of the base member honeycomb cells. The required precision of the reflector surface in turn depends on its intended application. That is, the thickness of the reflective sheet and the honeycomb cell size are interdependent, and depend in turn on the required precision of the reflector surface. For a high precision surface for use in astronomical telescope mirrors, the reflective member might suitably be of the order of 0.8 mm in thickness when used with a base member having a honeycomb cell size of the order of 0.25 inch (6.35 mm). Generally, the thickness of the reflective member is likely to be in the range 0.5 to 2 mm. An example of a suitable aluminium honeycomb material is 3003 aluminium, cell size 0.25 inch (6.35 mm), foil gauge 0.0015 inch (0.038 mm), nominal density 3.4 lb/ft³ (54.5 kg/m³) with a thickness of 25 mm (dependent on the size of the reflector).

The combination of the reflective member 14 and the base member 12 exhibits good rigidity. The casing members 16 and 18 are provided primarily to aid structural integrity and to protect the base member honeycomb against the ingress of moisture etc., to facilitate the attachment of other mechanical fittings thereto and to protect users against contact with the sharp edges of the honeycomb material. The casing ring 16 might suitably be of the order of 2 mm thick, with a depth corresponding to the thickness of the bonded base. The back casing plate 18 might suitably be of the order of 2 mm thick.

The reflector is assembled as follows.

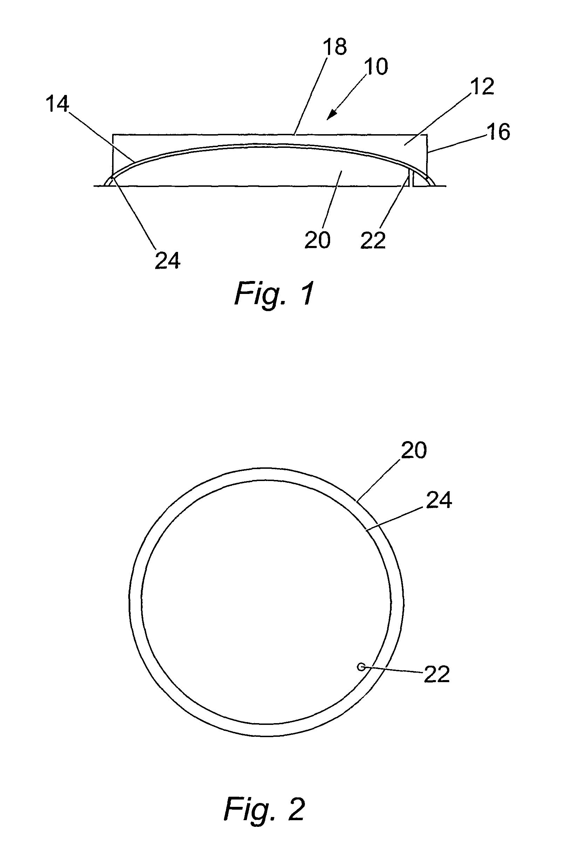

A mould 20 is formed, by any of a variety of known techniques, having a precision curved surface complementary to the required reflector surface. At least one vacuum port 22 extends through the mould 20 to communicate with the curved surface, and is connected to a vacuum source (not shown). The reflective member 14 is laid on top of the mould 20 and is sealed thereto by a seal member 24, such as an O-ring. The curvature of the mould 20 is exaggerated in Fig. 1. The reflective member 14 is sufficiently flexible to contact the seal member 24 around the periphery of the mould 20 when the member 14 is simply laid on top of the mould (if required, pressure could be applied around the periphery of the reflective member 14 to establish a seal between the member 14, the seal member 24 and the mould 20).

The vacuum source is operated to evacuate the space between the mould 20 and the reflective member 14, causing the reflective member 14 to deform and conform closely to the curved surface of the mould.

The surface of the mould 20 may be provided with one or more grooves (not shown) to assist in the rapid and uniform evacuation of air from between the mould 20 and the reflective member 14. The dimensions of such grooves is selected to be sufficiently small to avoid any undesirable deformation of the reflective member 14. It will be understood that the desired deformation of the reflective member 14 to conform to the surface of the mould 20 may comprise plastic and/or elastic deformation, depending on the material of the reflective member 14 and/or the degree of curvature.

While the vacuum is maintained, the front surface of the base member 12 is bonded to the reverse surface of the reflective member 14. Once the bonding agent has cured, the vacuum may be removed. If necessary, the front surface of the honeycomb base member 12 may be preformed (e.g. by crushing) to conform approximately to the required shape of the reflective surface. If the required curvature is small, the front surface of the base member 12 may be substantially planar, and the thickness of the bonding agent may vary to match the curvature of the reflective member 14.

The reflective member 14 as initially applied to the mould is slightly oversized in relation to the base member 12 and may subsequently be trimmed.

The casing members 16 and 18 are preferably bonded to the base member 12 and reflective member 14 while in situ on the mould and while the vacuum source is operating. Preferably, pressure is applied at least to the rear surface of the assembly while the bonding agent is curing to ensure good contact between the base member the bonding agent and the reflective member.

Aluminium or aluminium alloy is the preferred material for all of the components, but other materials, such as carbon fibre, could be used depending on the intended application of the reflector.

The surface of the mould 20 may be formed to sufficient precision that no post-processing of the reflector surface is necessary. If required, final polishing and/or coating of the reflector surface may be performed.

Improvements and modifications may be incorporated without departing from the scope of the invention.

## Claims

1. A method of forming an electromagnetic reflector (10) with a curved surface, comprising:
providing a mould (20) having a curved surface with a curvature opposite to that of the required curved surface;
providing a vacuum source communicating with the curved surface of the mould (20);
applying a flexible, generally planar member (14) that is to form the required curved surface to the oppositely curved surface of the mould (20);
operating the vacuum source to evacuate the space between the planar member (14) and the mould (20) such that the planar member (14) conforms closely to the curved surface of the mould (20); and
while continuing to operate the vacuum source, bonding a front surface of a structurally rigid base member (12) to the exposed surface of the planar member (14) opposite the surface in contact with the mould (20);
**characterised in that** the curved surface of the mould (20) is continuous apart from at least one vacuum port (22) and, optionally, one or more grooves for air evacuation.

2. The method of claim 1, further including deactivating the vacuum source once a bonding agent used to bond the base member (12) to the planar member (14) has been cured.

3. The method of claim 1 or claim 2, further including bonding at least one peripheral casing member (16) to a peripheral surface of the base member (12) and/or at least one generally planar casing member (18) to a rear surface of the base member (12).

4. The method of claim 3, wherein said at least one peripheral casing member (16) is bonded to the peripheral surface of the base member (12) and/or said at least one generally planar casing member (18) is bonded to the rear surface of the base member (12) while the base member (12) is in situ on the mould (20).

5. The method of claim 4, wherein said at least one peripheral casing member (16) is bonded to the peripheral surface of the base member (12) and/or said at least one generally planar casing member (18) is bonded to the rear surface of the base member (12) while the base member (12) is in situ on the mould (20) and while the vacuum source is operating.

6. The method of any preceding claim, wherein the shape in plan of the electromagnetic reflector (10) formed by the method is circular, or a part-circular segment, or polygonal, or a triangular segment of a polygonal shape.

7. The method of any preceding claim, wherein the curved surface is at least partially concave.

8. The method of any of claims 1 to 7, wherein the curved surface is at least partially convex.

9. The method of any preceding claim, wherein the base member (12) is formed from a rigid, low density material.

10. The method of claim 9, wherein the low density material is a honeycomb material.

11. The method of claim 10, wherein the honeycomb material is an aluminium or aluminium alloy honeycomb material.

12. The method of any preceding claim 1, wherein the flexible planar member (14) is a reflective member

13. The method of claim 12, wherein the reflective member (14) comprises a thin metallic sheet.

14. The method of claim 13, wherein the thin metallic sheet comprises a thin aluminium or aluminium alloy sheet.

15. The method of claim 14, wherein the aluminium or aluminium alloy sheet comprises an anodised aluminium or aluminium alloy sheet or an anodised and coated aluminium or aluminium alloy sheet.

16. The method of any preceding claim, wherein casing members (16,18) bonded to the base members (12) are formed from aluminium or aluminium alloy.

## Patentansprüche

1. Ein Verfahren zum Bilden eines elektromagnetischen Reflektors (10) mit einer gekrümmten Oberfläche, das Folgendes beinhaltet:
Bereitstellen einer Form (20) mit einer gekrümmten Oberfläche mit einer Krümmung, die der der erforderlichen gekrümmten Oberfläche entgegengesetzt ist;
Bereitstellen einer Vakuumquelle, die mit der gekrümmten Oberfläche der Form (20) in Kommunikation steht;
Auflegen eines flexiblen, im Allgemeinen ebenen Teils (14), das die erforderliche gekrümmte Oberfläche zu der entgegengesetzt gekrümmten Oberfläche der Form (20) bilden soll;
Betreiben der Vakuumquelle, um den Raum zwischen dem ebenen Teil (14) und der Form (20) zu evakuieren, so dass sich das ebene Teil (14) eng der gekrümmten Oberfläche der Form (20) anpasst; und
während des fortlaufenden Betreibens der Vakuumquelle, Binden einer vorderen Oberfläche eines strukturell steifen Basisteils (12) an die freiliegende Oberfläche des ebenen Teils (14), die der Oberfläche, die mit der Form (20) in Kontakt ist, entgegengesetzt ist;
**dadurch gekennzeichnet, dass** die gekrümmte Oberfläche der Form (20) mit Ausnahme von mindestens einer Vakuumöffnung (22) kontinuierlich ist.

2. Verfahren gemäß Anspruch 1, das ferner das Deaktivieren der Vakuumquelle umfasst, sobald ein Bindemittel, das zum Binden des Basisteils (12) an das ebene Teil (14) verwendet wird, ausgehärtet worden ist.

3. Verfahren gemäß Anspruch 1 oder Anspruch 2, das ferner das Binden von mindestens einem peripheren Mantelteil (16) an eine periphere Oberfläche des Basisteils (12) und/oder von mindestens einem im Allgemeinen ebenen Mantelteil (18) an eine hintere Oberfläche des Basisteils (12) umfasst.

4. Verfahren gemäß Anspruch 3, wobei das mindestens eine periphere Mantelteil (16) an die periphere Oberfläche des Basisteils (12) gebunden wird und/oder das mindestens eine im Allgemeinen ebene Mantelteil (18) an die hintere Oberfläche des Basisteils (12) gebunden wird, während sich das Basisteil (12) in situ auf der Form (20) befindet.

5. Verfahren gemäß Anspruch 4, wobei das mindestens eine periphere Mantelteil (16) an die periphere Oberfläche des Basisteils (12) gebunden wird und/oder das mindestens eine im Allgemeinen ebene Mantelteil (18) an die hintere Oberfläche des Basisteils (12) gebunden wird, während sich das Basisteil (12) in situ auf der Form (20) befindet und während die Vakuumquelle in Betrieb ist.

6. Verfahren gemäß einem der vorhergehenden Ansprüche, wobei die Gestalt des elektromagnetischen Reflektors (10), der durch das Verfahren gebildet wird, in Draufsicht kreisförmig oder ein teilweise kreisförmiges Segment oder polygonal oder ein dreieckiges Segment von polygonaler Gestalt ist.

7. Verfahren gemäß einem der vorhergehenden Ansprüche, wobei die gekrümmte Oberfläche mindestens teilweise konkav ist.

8. Verfahren gemäß einem der Ansprüche 1 bis 7, wobei die gekrümmte Oberfläche mindestens teilweise konvex ist.

9. Verfahren gemäß einem der vorhergehenden Ansprüche, wobei das Basisteil (12) aus einem steifen Material von geringer Dichte gebildet ist.

10. Verfahren gemäß Anspruch 9, wobei das Material von geringer Dichte ein Wabenmaterial ist.

11. Verfahren gemäß Anspruch 10, wobei das Wabenmaterial ein Wabenmaterial aus Aluminium oder Aluminiumlegierung ist.

12. Verfahren gemäß einem der vorhergehenden Ansprüche, wobei das flexible ebene Teil (14) ein reflektierendes Teil ist.

13. Verfahren gemäß Anspruch 12, wobei das reflektierende Teil (14) ein dünnes Metallblech beinhaltet.

14. Verfahren gemäß Anspruch 13, wobei das dünne Metallblech ein dünnes Blech aus Aluminium oder Aluminiumlegierung beinhaltet.

15. Verfahren gemäß Anspruch 14, wobei das Blech aus Aluminium oder Aluminiumlegierung ein Blech aus eloxiertem Aluminium oder eloxierter Aluminiumlegierung oder ein Blech aus eloxiertem und beschichtetem Aluminium oder eloxierter und beschichteter Aluminiumlegierung beinhaltet.

16. Verfahren gemäß einem der vorhergehenden Ansprüche, wobei an die Basisteile (12) gebundene Mantelteile (16, 18) aus Aluminium oder Aluminiumlegierung gebildet sind.

## Revendications

1. Un procédé de formage d'un réflecteur électromagnétique (10) avec une surface incurvée, comportant :
fournir un moule (20) ayant une surface incurvée dont la courbure est à l'opposé de celle de la surface incurvée requise ;
fournir une source de vide en communication avec la surface incurvée du moule (20) ;
appliquer un élément flexible généralement plan (14) qui doit former la surface incurvée requise sur la surface incurvée de façon opposée du moule (20) ;
faire fonctionner la source de vide pour faire le vide dans l'espace entre l'élément plan (14) et le moule (20) de façon à ce que l'élément plan (14) épouse étroitement la surface incurvée du moule (20) ; et
tout en continuant de faire fonctionner la source de vide, coller une surface avant d'un élément de base rigide d'un point de vue structurel (12) sur la surface exposée de l'élément plan (14) à l'opposé de la surface en contact avec le moule (20),
**caractérisé en ce que** la surface incurvée du moule (20) est continue à l'exception d'au moins un orifice à vide (22).

2. Le procédé de la revendication 1, comprenant de plus désactiver la source de vide une fois qu'un agent adhésif utilisé pour coller l'élément de base (12) sur l'élément plan (14) a été durci.

3. Le procédé de la revendication 1 ou la revendication 2, comprenant de plus coller au moins un élément de gainage périphérique (16) sur une surface périphérique de l'élément de base (12) et/ou au moins un élément de gainage généralement plan (18) sur une surface arrière de l'élément de base (12).

4. Le procédé de la revendication 3, dans lequel ledit au moins un élément de gainage périphérique (16) est collé sur la surface périphérique de l'élément de base (12) et/ou ledit au moins un élément de gainage généralement plan (18) est collé sur la surface arrière de l'élément de base (12) tandis que l'élément de base (12) est en place sur le moule (20).

5. Le procédé de la revendication 4, dans lequel ledit au moins un élément de gainage périphérique (16) est collé sur la surface périphérique de l'élément de base (12) et/ou ledit au moins un élément de gainage généralement plan (18) est collé sur la surface arrière de l'élément de base (12) tandis que l'élément de base (12) est en place sur le moule (20) et tandis que la source de vide est en fonctionnement.

6. Le procédé de n'importe quelle revendication précédente, dans lequel la configuration en plan du réflecteur électromagnétique (10) formé par le procédé est circulaire, ou un segment en partie circulaire, ou polygonale, ou un segment triangulaire d'une configuration polygonale.

7. Le procédé de n'importe quelle revendication précédente, dans lequel la surface incurvée est au moins partiellement concave.

8. Le procédé de n'importe lesquelles des revendications 1 à 7, dans lequel la surface incurvée est au moins partiellement convexe.

9. Le procédé de n'importe quelle revendication précédente, dans lequel l'élément de base (12) est formé à partir d'un matériau rigide à faible densité.

10. Le procédé de la revendication 9, dans lequel le matériau à faible densité est un matériau en nid d'abeilles.

11. Le procédé de la revendication 10, dans lequel le matériau en nid d'abeilles est un matériau en nid d'abeilles en aluminium ou en alliage d'aluminium.

12. Le procédé de n'importe quelle revendication précédente, dans lequel l'élément flexible plan (14) est un élément réflecteur.

13. Le procédé de la revendication 12, dans lequel l'élément réflecteur (14) comporte une mince feuille métallique.

14. Le procédé de la revendication 13, dans lequel la mince feuille métallique comporte une mince feuille en aluminium ou en alliage d'aluminium.

15. Le procédé de la revendication 14, dans lequel la feuille en aluminium ou en alliage d'aluminium comporte une feuille en aluminium ou en alliage d'aluminium anodisé ou une feuille en aluminium ou en alliage d'aluminium anodisé et revêtu.

16. Le procédé de n'importe quelle revendication précédente, dans lequel les éléments de gainage (16, 18) collés aux éléments de base (12) sont formés à partir d'aluminium ou d'alliage d'aluminium.
